# EUROPÄISCHE PATENTSCHRIFT

(11) **EP 0 455 995 B1**
(45) Veröffentlichungstag und Bekanntmachung des Hinweises auf die Patenterteilung: **04.08.1993**
(21) Anmeldenummer: 91105568.9
(22) Anmeldetag: 09.04.1991
(51) Int. Cl.: A01K 1/01

(54) **Vorrichtung zum Homogenisieren von Gülle in einem in Form eines Kanals angelegten Güllekeller**
Device for homogenizing semi-liquid manure in a manure pit with the form of a channel
Dispositif pour homogénéiser le fumier dans une fosse à lisier en forme de canal

(30) Priorität: 07.05.1990 DE 9005160 U
(43) Veröffentlichungstag der Anmeldung: 13.11.1991
(73) Patentinhaber: De Dissel Beheer B.V., NL-7122 AA Aalten (NL)
(72) Erfinder: Ansink, J.C., NL-7122 AA Aalten (NL)
(74) Vertreter: Schulze Horn, Stefan, Dipl.-Ing. M.Sc.

(56) Entgegenhaltungen:
- EP-A- 0 155 842
- DE-C- 3 839 599
- US-A- 3 155 375

## Beschreibung

Die vorliegende Erfindung betrifft eine Güllehomogenisierensvorrichtung mit einem in Form eines Kanals angelegten Güllekeller, dessen Verlauf einen geschlossenen Linienzug bildet und in welchem wenigstens eine Umwälzpumpe für eine Kreislaufförderung der Gülle entlang des Kanals angeordnet ist. Solch ein Vorrichtung ist aus der Praxis bekannt.

Bisher ist es üblich, mit einer oder mehreren übereinander angeordneten Umwälzpumpen innerhalb des als geschlossenes Kanalsystem ausgebildeten Güllekellers durch ständiges oder zumindest von Zeit zu Zeit erfolgendes Umwälzen der Gülle eine Entmischung und Abscheidung der festen Güllebestandteile an der Gülleoberfläche zu vermeiden.

In der Praxis hat sich gezeigt, daß diese Maßnahme insbesondere in den aufgrund der heute üblichen Massentierhaltung groß dimensionierten Ställen mit ihren entsprechend langen Güllekanalsystemen nicht ausreicht. Mit zunehmender Entfernung von der Pumpstelle nimmt die Strömungsgeschwindigkeit der Gülle, bedingt durch Reibungseffekte, Verzweigungen und Richtungsänderungen mit den sich dort ausbildenden Strömungswirbeln ständig ab. In diesen strömungsschwachen Bereichen reicht die Güllebewegung nicht mehr aus, eine Entmischung der Gülledispersion zu verhindern. Die weniger dichten, festen Güllebestandteile setzen sich an der Oberfläche ab und trocknen in der warmen Stalluft schnell an. Es bildet sich eine harte, auf der Gülleoberfläche schwimmende und aufgrund ihrer Kompaktheit kaum der Strömung folgende Kruste, unter welcher die flüssigen Gülleteile hinwegfließen, ohne die Kruste zu lösen. Hieraus resultiert die Erfordernis eines häufigen Betriebes der Umwälzpumpe, was zeit- und arbeitsintensiv ist und bei Antrieb der Pumpe durch die Zapfwelle eines Schleppers diesen für andere Arbeiten blockiert. Das Anbringen weiterer Umwälzpumpenanordnungen in den strömungsschwachen Bereichen ist aufgrund der hohen Anschaffungskosten sowie des vermehrten Energieverbrauches unrentabel.

Es stellt sich daher die Aufgabe, eine Vorrichtung zu schaffen, welche bei hoher Betriebssicherheit und Verschleißfestigkeit die Bildung harter Krusten auf der Gülleoberfläche verhindert und kostengünstig in der Anschaffung und im Betrieb ist.

Erfindungsgemäß wird diese Aufgabe durch eine Güllehomogenisierensvorrichtung gemäß dem Oberbegriff des Patentanspruches 1 gelöst, welche dadurch gekennzeichnet ist, daß sie wenigstens ein zusätzlich zu der Umwälzpumpe im Verlauf des Kanals in diesem angeordnetes, durch die Gülleströmung im Kanal in Drehung versetzbares Schaufelrad aufweist, dessen Drehachse im wesentlichen horizontal und quer zur Kanallängsachse verläuft und dessen Durchmesser im wesentlichen der Höhe des Kanals entspricht.

Vorteilhaft wird mit dieser Vorrichtung eine alle Gülleschichten umfassende Durchmischung der Gülledispersion bewirkt, wobei etwaig sich auf der Oberfläche bereits abgeschiedene und gegebenenfalls verkrustete feste Güllebestandteile durch die Schaufeln des rotierenden Schaufelrades unter die Gülleoberfläche gedrückt und wieder in der flüssigen Güllephase dispergiert werden. Auf höchst einfache Weise wird somit die oben beschriebene Entmischung und Krustenbildung mit all ihren nachteiligen Folgen vermieden. Die einfache mechanische Konstruktion ohne eigenen Antrieb gewährleistet einen langfristigen, störungsfreien Betrieb sowie niedrige Anschaffungs- und Unterhaltskosten, welche durch die Wahl geeigneter, kostengünstig zu beziehender Werkstoffe weiter gesenkt werden können.

Zur Erhöhung des Strömungswiderstandes können die Schaufeln des Schaufelrades gewölbt ausgebildet sein, was die Laufeigenschaften des Schaufelrades verbessert.

In einer weiteren vorteilhaften Ausgestaltung kann das Schaufelrad zwei Achsstummel aufweisen, mit welchen es in zwei passende, nach oben oder schräg oben offene, gabelförmige Aufnahmen eines Tragrahmens eingesetzt werden kann. Diese unkomplizierte Halterung des Schaufelrades ermöglicht ein zeitsparendes und wenig aufwendiges Montieren und Demontieren des Schaufelrades durch einfaches Herausziehen bzw. Einschieben.

In einer weiteren vorteilhaften Ausgestaltung können neben und/oder unter dem Schaufelrad Leitplatten angebracht sein, mit denen der Kanalquerschnitt verengt wird. Diese Verengung bewirkt eine wünschenswerte Erhöhung der Strömungsgeschwindigkeit der auf die Schaufeln treffenden Gülleflüssigkeit, wodurch das Schaufelrad besonders wirksam in Drehung versetzt wird.

Weitere vorteilhafte Ausgestaltungen der Vorrichtung sind in den Unteransprüchen 7 bis 9 aufgeführt.

Ein bevorzugtes Ausführungsbeispiel der Vorrichtung wird im folgenden anhand einer Zeichnung erläutert. Die Figuren der Zeichnung zeigen:
- Fig. 1: in schematischer Darstellung einen güllegefüllten Güllekanal im Längsschnitt sowie eine darin angebrachte Vorrichtung gemäß der Erfindung in Seitenansicht.
- Fig. 2: eine Aufsicht auf den Güllekanal mit der darin angebrachten Vorrichtung.

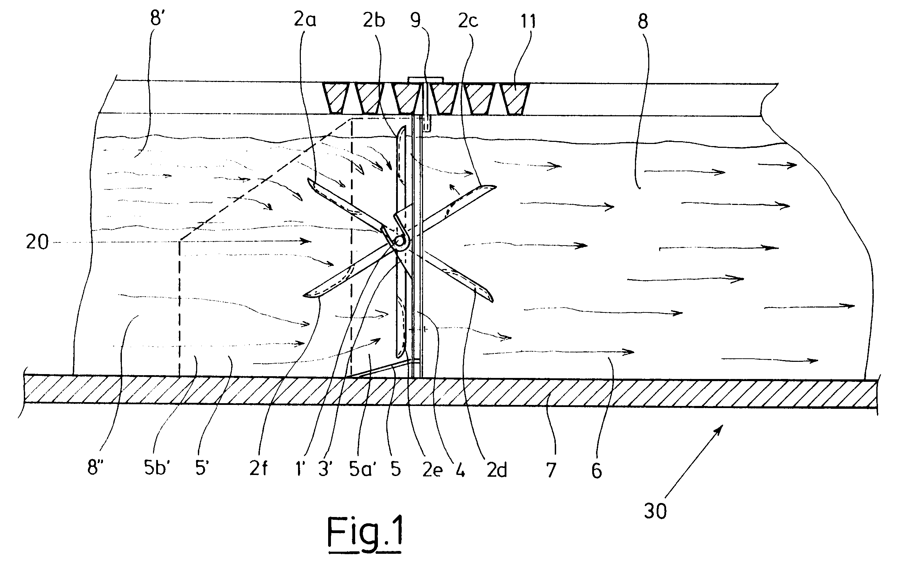

In einem Kanal 30 mit einem Kanalboden 7 sowie Kanalwänden 7', 7'', welcher mit in Strömungsrichtung 6 fließender Gülle 8 gefüllt ist und als Abdeckung ein Rost 11 aufweist, ist quer zur Kanallängsachse eine Vorrichtung zur Güllehomogenisierung angebracht und mit Verankerungen 9 am Abdeckrost 11 befestigt. Wie aus der Fig. 1 hervorgeht, besteht die Vorrichtung im wesentlichen aus einem in einem Rahmen 4 gehalterten Schaufelrad 20, das in seinem Durchmesser der Höhe des Kanals 30 entspricht und mit dessen Hilfe die in Strömungsrichtung 6 vor der Vorrichtung befindliche, in eine flüssige Phase 8'' und eine darauf schwimmende feste Phase 8' getrennte Gülleflüssigkeit 8 wieder durchmischt und homogenisiert wird. Zur Halterung des Schaufelrades 20 weist der Rahmen 4 an seinen Seiten zwei Aufnahmen 3, 3' auf, von denen allerdings in Fig. 1 nur eine sichtbar ist. Diese Aufnahmen 3, 3' weisen nach oben oder schräg oben offene Aussparungen auf, in welche das Schaufelrad 20 mit vorstehenden Achsstummeln 1', 1'' seiner Achse 1, von denen aus perspektivischen Gründen in Fig. 1 nur der Achsstummel 1' sichtbar ist, einsetzbar ist. In einer weiteren, hier nicht dargestellten Ausführung können die Aufnahmen 3, 3' mit Kunststoff-Gleitlagern versehen sein.

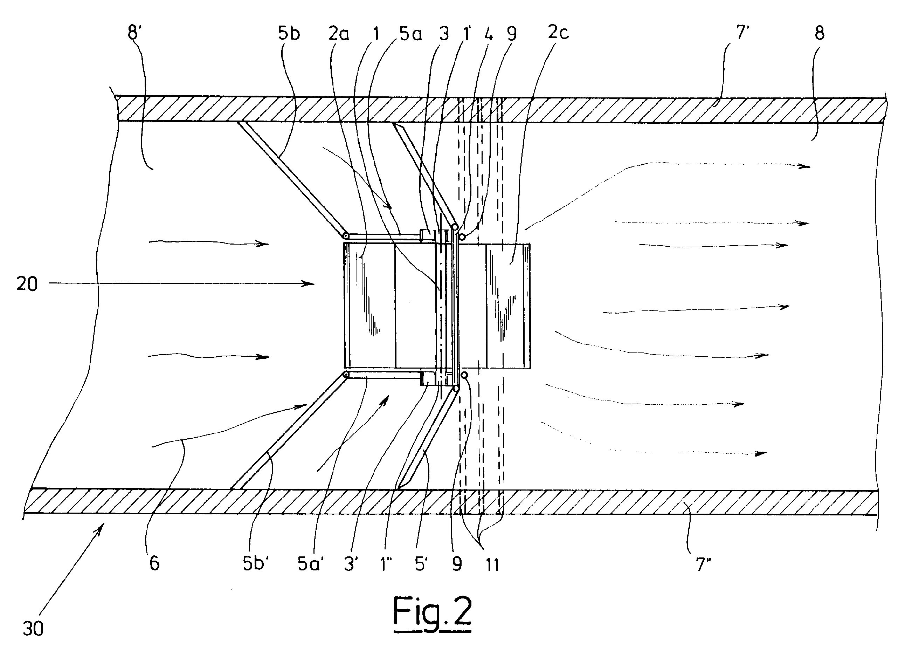

An den Seiten sowie unterhalb des Rahmens 4 sind Leitplatten 5, 5', 5'', von denen aus perspektivischen Gründen die eine seitliche Leitplatte 5'' in Fig. 1 nicht zu sehen ist, zur Verengung des Kanalquerschnittes angebracht. Gemäß der in Fig. 2 dargestellten Ausgestaltung der Vorrichtung können die Leitplatten 5, 5', 5'' aus mehreren gelenkig miteinander verbundenen, verstellbaren Plattenteilen 5a, 5b, 5a', 5b', z. B. aus Blech, bestehen und so eine optimale Anpassung an die jeweiligen Kanalquerschnitte ermöglichen.

Das in die Aufnahmen 3, 3' eingehängte Schaufelrad 20 besteht außer seiner Achse 1 mit den vorstehenden Achsstummeln 1', 1'' aus mehreren, hier sechs in radiärer Anordnung angebrachten Schaufelradarmen mit Schaufelblättern 2a-2f. In der hier dargestellten Ausführung weisen die Schaufelblätter 2a-2f eine Wölbung auf, wobei im unteren Teil des Schaufelrades die konkave Seite die Anströmseite ist. Hierdurch wird auch noch bei in voller Höhe gefülltem Güllekanal eine Drehung des Schaufelrades durch die Gülleströmung sichergestellt.

Um eine schnelle Korrosion der Vorrichtung zu vermeiden, ist sie vorzugsweise aus verzinktem Stahlblech, gülleresistentem Kunststoff oder in Gemischtbauweise aus Stahlblech und Kunststoff gefertigt.

## Patentansprüche

1. Güllehomogenisierensvorrichtung mit einem in Form eines Kanals (30) angelegten Güllekeller, dessen Verlauf einen geschlossenen Linienzug bildet und in welchem wenistens eine Umwälzpumpe für eine Kreislaufförderung der Gülle entlang des Kanals angeordnet ist, dadurch gekennzeichnet,
daß die Vorrichtung wenigstens ein zusätzlich zu der Umwälzpumpe im Verlauf des Kanals (30) in diesem angeordnetes, durch die Gülleströmung im Kanal (30) in Drehung versetzbares Schaufelrad (20) aufweist, dessen Drehachse (1) im wesentlichen horizontal und quer zur Kanallängsachse verläuft und dessen Durchmesser im wesentlichen der Höhe des Kanals (30) entspricht.

2. Vorrichtung nach Anspruch 1, dadurch gekennzeichnet, daß die Schaufeln (2a-2f) des Schaufelrades (20) gewölbt ausgebildet sind.

3. Vorrichtung nach wenigstens einem der Ansprüche 1 oder 2, dadurch gekennzeichnet, daß das Schaufelrad (20) in einem im Kanal (30) angeordneten Tragrahmen (4) gehaltert ist.

4. Vorrichtung nach wenigstens einem der Ansprüche 1 bis 3, dadurch gekennzeichnet, daß das Schaufelrad (20) eine Achse (1) mit zwei Achsstummeln (1', 1'') und der Tragrahmen (4) zwei nach oben oder schräg nach oben hin offene, zu den Achsstummeln (1', 1'') passende, gabelförmige Aufnahmen (3, 3') aufweist.

5. Vorrichtung nach wenigstens einem der Ansprüche 1 bis 4, dadurch gekennzeichnet, daß der Kanalquerschnitt in dem Bereich, in dem das Schaufelrad (20) angeordnet ist, verengt ist.

6. Vorrichtung nach wenigstens einem der Ansprüche 1 bis 5, dadurch gekennzeichnet, daß zur Bildung der Verengung des Kanalquerschnittes vor und/oder seitlich neben und/oder unter dem Schaufelrad (20) Leitplatten (5, 5' 5'') angeordnet sind.

7. Vorrichtung nach wenigstens einem der Ansprüche 1 bis 6, dadurch gekennzeichnet, daß die Leitplatten (5, 5', 5'') aus mehreren gelenkig miteinander verbundenen, verstellbaren Plattenteilen (5a, 5b, 5a', 5b') bestehen.

8. Vorrichtung nach wenigstens einem der Ansprüche 1 bis 7, dadurch gekennzeichnet, daß zwischen den Achsstummeln (1', 1'') des Schaufelrades (20) und deren Aufnahmen (3, 3') am Tragrahmen (4) Kunststoffgleitlager vorgesehen sind.

9. Vorrichtung nach wenistens einem der Ansprüche 1 bis 8, dadurch gekennzeichnet, daß die Vorrichtung aus verzinktem Stahl oder aus Kunststoff oder in Gemischtbauweise aus Stahl und Kunststoff besteht.

## Claims

1. Device for homogenizing semi-liquid manure comprising a manure pit with the form of a channel (30), the manure pit extending in a closed continous line with at least one circulating pump for circulating the semi-liquid manure along the channel positioned in the manure pit,
**characterized in**,
that the device comprises in addition to the circulating pump at least one bucket wheel (20) positioned in the course of the channel (30) and rotatable by the flow of the semi-liquid manure in the channel (30), with the axis (1) of rotation of the bucket wheel extending substantially horizontally and transversely in relation to the longitudinal axis of the channel and with the diameter of the bucket wheel substantially corresponding with the heigth of the channel (30).

2. Device according to claim 1, characterized in that the blades (2a - 2f) of the bucket wheel (20) are curved.

3. Device according to at least one of the claims 1 or 2, characterized in that the bucket wheel (20) is supported in a supporting frame (4) arranged in the channel (30).

4. Device according to at least one of the claims 1 to 3, characterized in that the bucket wheel (20) comprises an axis (1) with two axle stubs (1', 1'') and the supporting frame (4) comprises two forked seats (3, 3') open at the top or open inclined towards the top thereof, with the forked seats matching the axle stubs (1', 1'').

5. Device according to at least one of the claims 1 to 4, characterized in that the channel cross section is narrowed in the area where the bucket wheel (20) is arranged.

6. Device according to at least one of the claims 1 to 5, characterized in that for forming the narrowing of the channel cross section guiding plates (5, 5', 5'') are arranged in front of and/or alongside and/or below the bucket wheel (20).

7. Device according to at least one of the claims 1 to 6, characterized in that the guiding plates (5, 5', 5'') consist of several adjustable guiding plate members (5a, 5b, 5a', 5b') articulatedly connected with each other.

8. Device according to at least one of the claims 1 to 7, characterized in that plastic plain bearings are provided between the acle stubs (1, 1') of the bucket wheel (20) and the seats (3, 3') thereof at the supporting frame (4).

9. Device according to at least one of the claims 1 to 8, characterized in that the device consists of zinc coated steel or plastic or a composite construction of steel and plastic.

## Revendications

1. Dispositif d'homogénéisation de lisier comprenant une fosse à lisier agencée sous la forme d'un canal (30), dont le parcours forme par une ligne fermée et dans lequel est disposée au moins une pompe de circulation pour assurer la circulation en circuit fermé du lisier le long du canal, caractérisé en ce que le dispositif comporte, en supplément de la pompe de circulation dans le circuit du canal (30), au moins une roue à palettes (20) disposée dans le canal et susceptible d'être entraînée en rotation par l'écoulement de lisier dans le canal (30), l'axe de rotation (1) de cette roue à palettes étant disposé de façon sensiblement horizontale et transversalement par rapport à l'axe longitudinal du canal et son diamètre correspondant sensiblement à la hauteur du canal (30).

2. Dispositif selon la revendication 1, caractérisé en ce que les palettes (2a à 2f) de la roue à palettes (20) sont incurvées.

3. Dispositif selon au moins l'une des revendications 1 ou 2, caractérisé en ce que la roue à palettes (20) est maintenue dans un cadre support (4) disposé dans le canal (30).

4. Dispositif selon au moins l'une des revendications 1 à 3, caractérisé en ce que la roue à palettes (20) comporte un arbre (1) muni de deux bouts d'arbre (1', 1'') et le cadre de support (4) deux logements d'arbre (3, 3') ouverts vers le haut ou inclinés et ouverts vers le haut, ajustées sur les bouts d'arbre et en forme de fourche.

5. Dispositif selon au moins l'une des revendications 1 à 4, caractérisé en ce que la section du canal est réduite dans la zone où est disposée la roue à palettes (20).

6. Dispositif selon au moins l'une des revendications 1 à 5, caractérisé en ce que pour réaliser le rétrécissement de la section du canal, des plaques de guidage (5, 5', 5'') sont disposées devant et/ou latéralement à côté et/ou en-dessous de la roue à palettes (20).

7. Dispositif selon au moins l'une des revendications 1 à 6, caractérisé en ce que les plaques de guidage (5, 5', 5'') sont constituées de plusieurs parties de plaques (5a, 5b, 5a', 5b') réglables, articulées les unes aux autres.

8. Dispositif selon au moins l'une des revendications 1 à 7, caractérisé en ce qu'entre les bouts d'arbre (1', 1'') de la roue à palettes (20) et leurs logements (3, 3'), sont prévus sur le cadre de support (4) des paliers de glissement en matière plastique.

9. Dispositif selon au moins l'une des revendications 1 à 8, caractérisé en ce que le dispositif est réalisé en acier galvanisé, ou en matière plastique, ou en structure mixte d'acier et de matière plastique.
